(19) Europäisches Patentamt
European Patent Office
Office européen des brevets

(11) Publication number: 0 319 203
A2

(12) EUROPEAN PATENT APPLICATION

(21) Application number: 88311169.2

(22) Date of filing: 25.11.88

(51) Int. Cl.4: C08L 67/06 , C08K 5/09 , //(C08L67/06,31:04,67:00)

(30) Priority: 30.11.87 JP 299696/87
30.11.87 JP 299697/87
15.11.88 JP 286744/88

(43) Date of publication of application:
07.06.89 Bulletin 89/23

(84) Designated Contracting States:
DE ES FR GB IT SE

(71) Applicant: MITSUI TOATSU CHEMICALS, INCORPORATED
2-5 Kasumigaseki 3-chome
Chiyoda-Ku Tokyo 100(JP)

Applicant: NISSAN MOTOR CO., LTD.
No.2, Takara-cho, Kanagawa-ku
Yokohama-shi Kanagawa-ken 221(JP)

(72) Inventor: Kohda, Kazuaki
A-1101, Riberahiruzu 2767-55, Iijimacho
Sakae-ku
Yokohama-shi Kanagawa-ken(JP)
Inventor: Asakawa, Kaoru
1-11-2-306, Futaba
Yokosuka-shi Kanagawa-ken(JP)
Inventor: Fukushima, Toshikata
1927 Nagasawa
Yokosuka-shi Kanagawa-ken(JP)
Inventor: Haga, Yasuhiko
2785-1 Mutsuno
Mobara-shi Chiba-ken(JP)
Inventor: 1Shigeta, Issei
1-810 Narakitadanchi 2913, Naramachi
Midori-ku
Yokohama-shi Kanagawa-ken(JP)

(74) Representative: Griffin, Kenneth David et al
Saunders & Dolleymore 9, Rickmansworth Road
Watford Hertfordshire WD1 7HE(GB)

(54) Improvements in materials for the manufacture of fiber-reinforced thermosetting resin mouldings.

(57) An improved FRP molding material wherein 1.5 to 6.0% of an acid-modified vinyl acetate copolymer having an acid value of 5 to 35 mg KOH per gram and/or 1.0 to 7.0% of a saturated polyester compound having a molecular weight per ester linkage of 70 to 250 is added thereto as a low profile additive, and wherein 0.5 to 2.5% of a higher fatty acid calcium salt is used.

EP 0 319 203 A2

# Improvements in Materials for the Manufacture of Fiber-reinforced Thermosetting Resin Moldings

## Background of the Invention:

### a. Field of the Invention:

This invention relates to materials for the manufacture of fiber-reinforced plastics (abbreviated as FRP) moldings comprising thermosetting resins. More particularly, it relates to molding materials which are processed in molds under high-temperature and high-pressure conditions, such as bulk molding compounds (abbreviated as BMC), sheet molding compounds (abbreviated as SMC), metal matched die molding materials (abbreviated as MMD materials) and resin injection molding materials (abbreviated as RI materials).

### b. Description of the Prior Art:

FRPs have high strength and rigidity in spite of their light weight and, moreover, have good thermal resistance and corrosion resistance. Therefore, they are being widely used as structural materials.

When used as materials for the manufacture of FRP moldings, BMC, SMC, MMD materials and RI materials are processed under high-temperature and high-pressure conditions according to machine molding techniques using metal or resin molds. In various FRP production processes, these materials are known to be capable of providing especially high productivity including mass producibility. Accordingly, they are expected to enjoy an increasing demand as construction materials, materials for electrical applicance parts, materials for industrial equipment, and materials for ships and vehicles.

In recent years, the need for plastic automobile parts is growing for purposes of weight saving. Under these circumstances, the aforesaid molding materials are attracting much attention, especially as materials for the manufacture of automobile body panels, becasue they are excellent in rigidity, thermal resistance and cost effectiveness and because the molded articles formed therefrom have the same ddgree of surface smoothness as conventional steel products. Thus, a rapidly increasing demand is expected in this field of application.

In these BMCs, SMCs, MMD materials and RI materials, one or more thermoplastic resins such as polyethylene, polystyrene, acid-modified vinyl acetate copolymers, vinyl acetate copolymers, polymethyl methacrylate, SBS and saturated polyesters are usually incorporated for the purpose of preventing molding shrinkage during heat curing or the resulting deformations (e.g., warpage and distortion) of the molded article and improving the surface smoothness of the molded article.

In molding materials for precision molding applications having a very high level of requirements concerning shrinkage and surface smoothness, e.g., for the manufacture of automobile body panels, the thermoplastic resins generally contain a low profile additive (hereinafter abbreviated as LPA) at high concentrations.

According to the behavior in unsaturated polyester resins, LPAs are roughly divided into two types. When observed on a microscopic scale, the first type of LPA dissolves therein without formation of boundary surfaces, and the second type of LPA is dispersed therein to form islands having boundary surfaces.

From the viewpoint of various properties such as the shelf stability and moldability of molding materials and the mechanical properties and water resistance of molded articles, these LPAS have both advantages and disadvantages. In order to meet the various requirements of the desired molded articles, they are selected and blended after thorough investigation and testing.

Typical LPAS include acid-modified vinyl acetate copolymers and saturated polyesters or their modified products. These LPAs are characterized in that they are excellent in various properties including shrinkage controlling properties, mixtures prepared by mixing such an LPA with an unsaturated polyester resin have low viscosity, molding materials prepared by incorporating an inorganic filler and a reinforcing fiber in such a mixture have excellent shelf stability, and the molded articles formed therefrom are free of surface defects (such as poor gloss and pinholes) which are frequently developed during the molding process because of the separation of the LPA. Accordingly, the LPAs seem to be highly suitable for use in applications (such as automobile body panels) having an intricate shape and requiring stable performance for a long period of

time.

However, the use of an acid-modified vinyl acetate copolymer or a saturated polyester as an LPA has the disadvantage that, when the molding material is heat-cured in a mold and the resulting molded article is removed from the mold, the surface of the molded article tends to be broken because of the strong adhesion of the molded article to the specular surface of the mold.

In many cases, cracks are formed in the surface of the molded article or thin pieces are locally stripped from the surface of the molded article. This will not impair the physical or mechanical properties of the molded article. However, where molded articles (e.g., automobile body panels) having a very high level of requirements concerning the quality of external appearance are desired, even molded articles having slight surface defects developed during removal from the mold will be discarded as defectives.

Moreover, when surface defects are developed during removal of the molded article from the mold, the stripped thin pieces of the molded article adhere to the mold and cause contamination thereof.

Because of such contamination, cleaning and adjustement of the mold are required after each cycle of molding. This will make it practically impossible to produce molded articles with high efficiency.

One means for overcoming the disadvantage of poor mold release properties leading to such great difficulties is to incorporate in the molding material an increased amount of an internal release agent selected from zinc stearate, phosphate compounds, such as ZELEC UN (a product of E. I. DuPont de Nemours & Co.), and fatty acid amides. However, this means causes a reduction in the physical performance or water resistance of the molded article and, moreover, exerts a markedly adverse influence on the surface smoothness of the molded article.

Another means is to apply an external release agent to the mold prior to molding. Useful external release agents include silicones, fluoroplastics, phosphoric esters, vegetable waxes (e.g., carnauba wax) and the like. These external release agents serve to form a release film and thereby decrease the adhesion between the molded plate and the mold.

However, this means has the disadvantage that the application of an external release agent prior to molding inhibits high-speed mass production characteristic of BMCs, SMCs, MMD materials and RI materials. Moreover, where the products are to be coated, the external release agent applied to the mold significantly impair the adhesion of the coating film.

## Summary of the Invention:

### (Objects of the Invention)

It is the primary object of the present invention to provide an FRP molding material which, by incorporating therein an acid-modified vinyl acetate copolymer or a saturated polyester compound and/or its modified product as an LPA having compatibility with the unsaturated polyester resin, can overcome the above-described disadvantages which are encountered in the molding process of FRP molding materials having a significantly reduced degree of molding shrinkage, and can hence produce molded articles having excellent strength, ridigity and surface smoothness.

### (Disclosure of the Invention)

According to the present invention, there is provided an FRP molding material containing an unsaturated polyester resin, an inorganic filler and a fibrous reinforcing agent as principal ingredients, the FRP molding material being characterized in that 1.5 to 6.0% by weight of an acid-modified vinyl acetate copolymer having an acid value (as determined by the method of JIS-K-6901) of 5 to 35 mg KOH per gram and/or 1.0 to 7.0% by weight of a saturated polyester compound having a molecular weight per ester linkage of 70 to 250 is added thereto, and 0.5 to 2.5% by weight of a higher fatty acid calcium salt is used.

The weight percentages used herein are based on the total weight of the molding material.

## Detailed Description of the Invention:

The acid-modified vinyl acetate copolymer used in the present invention can be any of such copolymers formed by various polymerization techniques including bulk polymerization, solution polymerization, emulsion polymerization, suspension polymerization and the like. The molecular weight of the acid-modified vinyl acetate copolymer is desirably in the range of 10,000 to 200,000.

For purposes of acid modification, there is used an unsaturated acid having an ethylenically unsaturated bond which is copolymerizable with vinyl acetate. Useful unsaturated acids include acrylic acid, methacrylic acid, maleic acid, fumaric acid, crotonic acid, vinylacetic acid and the like. These unsaturated acids may be used in admixture of two or more.

Alternatively, there can also be used random or block copolymers formed by use of one or more ethylenically unsaturated monomers such as ethylene, propylene, vinyl acetate, acrylic ester compounds, methacrylic ester compounds, maleic ester compounds, fumaric ester compounds, crotonic esters and styrene.

In the present invention, it is essential that the acid value of the acid-modified vinyl acetate copolymer (as determined by the method of JIS-K-6901) be in the range of 5 to 35 mg KOH per gram of the copolymer. If the acid value is less than 5 mg KOH, the copolymer will separate markedly from the molding material and the desired reduction in the degree of shrinkage will not be achieved. If the acid value is greater than 35 mg KOH, the vinyl acetate content of the copolymer will become unduly low and the desired reduction in the degree of shrinkage will not be achieved again.

In order to achieve the effects of the present invention, it is also essential that the content of the aforesaid acid-modified vinyl acetate copolymer be in the specified range, i.e., in the range of 1.5 to 6.0% by weight.

If the content is less than 1.5% by weight, the acid-modified vinyl acetate copolymer will not function satisfactorily to prevent the molded article from developing surface defects during its molding. If the content is greater than 6.0% by weight, the acid-modified vinyl acetate copolymer will separate from the molding material. As a result, the effect of reducing the degree of shrinkage of the molded article may be diminished, or the increase in thermoplastic resin content may cause a significant reduction in the physical performance of the FRP. In either case, the resulting product will not be suited for practical purposes.

As far as the content of the acid-modified vinyl acetate copolymer is within the above-defined range, it is also within the scope of the present invention to use, together with the acid-modified vinyl acetate copolymer, other thermoplastic resin components including polyethylene, polystyrene, polymethyl methacrylate, rubber components (e.g., SBR, NBR and SBS) and hydrogenation products thereof, and the like.

If necessary, the acid-modified vinyl acetate copolymer may be used in admixture with an ethylenically unsaturated monomer such as styrene, methyl methacrylate or vinyltoluene, or a polyvinyl compound such as compound such as divinylbenzene or diallyl phthalate.

Next, the saturated polyester compound used in the present invention usually comprises a condensation product obtained by the reaction of a saturated polybasic acid free of ethylenically unsaturation or an anhydride thereof with a polyhydric alcohol. Useful saturated polybasic acids and anhydrides thereof include phthalic acid and its anhydride; isophthalic acid, terephthalic acid, adipic acid, succinic acid and their anhydrides; HET acid; tetrahydrophthalic acid and its anhydride; hexahydrophthalic acid and its anhydride; and the like.

Useful polyhydric alcohols include etylene glycol, propylene glycol, butylene glycol, neopentyl glycol, 1,6-hexanediol, diethylene glycol, dipropylene glycol, triethylene glycol, polyethylene glycol, glycerol, trimethylolpropane, pentaerythritol, adducts of bisphenol with ethylene oxide or propylene oxide, hydrogenated bisphenol and the like.

Part of the polybasic acid may be replaced by a monobasic acid such as fatty acid or benzoic acid, and part of the polyhydric alcohol may be replaced by a monohydric alcohol.

Moreover, saturated polyester compounds useful in the present invention can also be formed by replacing the saturated polybasic acid by an ester thereof (e.g., dimethyl terephthalate) and effecting ester interchange between the ester and a polyhydric alcohol.

Furthermore, saturated polyester compounds useful in the present invention can also be formed by ring-opening polymerization of a compound having an ester linkage in the molecule, such as caprolactone.

In addition, compounds obtained by subjecting the aforesaid polyester compounds to chain extension with the aid of a polyfunctional isocyanate compound such as tolylene diisocyanate, diphenylmethane diisocyanate, polymethyl polyphenyl isocyanate (crude MDI) or isophorone diisocyanate, also come within the category of the saturated polyester compound of the present invention.

If necessary, these saturated polyester compounds may be used in the form of a solution in an ethylenically unsaturated monomer (such as styrene, methyl methacrylate or vinyltoluene) or a polyevinyl compound (such as divinylbenzene or diallyl naphthalate).

In the present invention, saturated polyester compounds having a molecular weight per ester linkage in

the range of 70 to 250 are useful. If the molecular weight is less than 70 or greater than 250, the desired effect of reducing the degree of shrinkage cannot be obtained, partly because the saturated polyeste compound will separate from the unsaturate polyester resin.

As used herein, the term "molecular weight per ester linkage" means a value calculated from the number of moles of the acid component(s) and glycol component(s) used in the synthesis of the saturated polyester compound. More specifically, this value is obtained by calculating the molecular weight of the model repeating unit on the assumption that the acid component(s) and the glycol component(s) have reacted with each other stoichiometrically, and then dividing the molecular weight by the number of ester linkages present in the repeated unit.

In this calculation, the water eliminated during the esterification reaction, and/or the alcohol used in the case of ester interchange, and the acid or glycol component(s) used in excess, and the polyfunctional isocyanate component used to modify the saturated polyester compound are excluded. For example, when 1.0 mole of adipic acid, 0.5 mole of ethylene glycol and 0.5 mole of neopentyl glycol are reacted, the following model repeating unit is obtained.

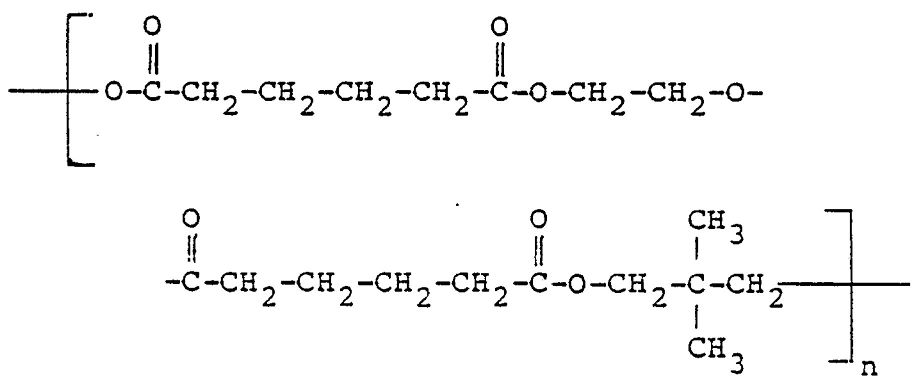

On the assumption that the atomic weights of carbon, oxygen and hydrogen are 12, 16 and 1, respectively, its molecular weight per ester linkage can be calculated as follows:
$(19 \times 12 + 16 \times 8 + 30 \times 1) \div 4 = 96.5$

More generally, in the combination of n acid components and m alcohol components, the molar fraction and molecular weight of the i-th acid component are represented by AM(i) and AW(i), respectively, and the molar fraction and molecular weight of the j-th alcohol component are represented by BM(j) and BW(j), respectively.

$$\text{Then,} \quad \sum_{i=1}^{n} AM(i) = 1 \text{ and } \sum_{j=1}^{m} BM(j) = 1.$$

Now, the molecular weight per ester linkage can be calculated by adding the molecular weights of the acid and alcohol components in proportion to their molar fractions, subtracting 36 (i.e., the weight of two water molecules eliminated as a result of the reaction) from the imaginary molecular weight, and dividing the difference by 2 (i.e., the number of ester linkages present in the imaginary molecule).

Thus, the molecular weight per ester linkage can be calculated according to the following equation:

$$\text{Molecular weight per ester linkage} = \left[ \sum_{i=1}^{n} \{AM(i) \times AW(i)\} + \sum_{j=1}^{m} \{BM(j) \times BW(j)\} - 36 \right] / 2$$

In order to achieve the effects of the present invention, it is also essential that the content of the saturated polyester compound in the molding material be in the range of 1.0 to 7.0% by weight.

If the content is less than 1.0% by weight, the resulting molded article may have surface defects in spite of the addition of the saturated polyesters compound. If the content is greater than 7.0% by weight, the effect of reducing the degree of shrinkage of the molded article will be diminished due to the separation

of the saturated polyester compound from the unsaturated polyester resin, and/or a marked reduction in the physical performance of the FRP will occur as a result of the increase in thermoplastic resin content. In these cases, therefore, the resulting products will not be suited for practical purposes.

As far as the content of the saturated polyester compound is within the above-defined range, it is also within the scope of the present invention, of course, to use, together with the saturated polyester compound, other thermoplastic resin components including polyethylene, polystyrene, polymethyl methacrylate, rubber components (e.g., SBR, NBR and SBS) and hydrogenation products thereof, and the like.

The higher fatty acid calcium salt used in the present invention can be any form of 2 higher fatty acid calcium salt, irrespective of its method of preparation. Prior to use, its particle size is adjusted to not greater than 100 mesh and preferably not greater than 200 mesh.

The higher fatty acid calcium salt may be either a saturated fatty acid calcium salt or an unsaturated fatty acid calcium salt. Among others, higher fatty acid calcium salts having 12 to 30 carbon atoms in the fatty acid moiety are preferred. Useful higher fatty acid calcium salts include, for example, calcium laurate, calcium palmitate, calcium myristate, calcium stearate, calcium oleate, calcium linoleate and calcium linolenate.

The content of a higher fatty acid calcium salt should be in range of 0.5 to 2.5% by weight and preferably in the range of 0.75 to 1.50% by weight.

If the content is less than 0.5% by weight, the effect of preventing the molded article from developing surface defects during its molding will not be produced. If the content is greater than 2.5% by weight, the resin compound consisting of all ingredients except the reinforcing fiber will show an increased viscosity in the preparation of BMCs, SMCs, MMD materials and IR materials. As a result, the resin compound will fail to penetrate fully into the reinforcing fiber, resulting in a marked reduction in the physical and chemical performance of the resulting FRP and a very poor appearance of the molded articles.

As far as the content of a higher fatty acid calcium salt is within the above-defined range, it is also within the scope of the present invention to use so-called internal release agents (i.e., additives for improving mold release properties, such as zinc stearate, phosphate alcohol and fatty acid amides) in combination with the higher fatty acid calcium salt.

The unsaturated polyester resin used in the present invention usually comprises a polyester compound formed by the condensation of a polybasic acid or its anhydride with a polyhydric alcohol and containing ethylenically unsaturated bonds in a part thereof. If necessary, this polyester compound may be mixed with and dissolved in one or more reactive diluents comprising ethylenically unsaturated monomers such as styrene, methyl methacrylate, vinyltoluene and p-methylstyrene.

Alternatively, polyvinyl compounds such as divinylbenzene and diallyl phthalate may be used as reactive diluents.

Polybasic acids and anhydrides thereof which are useful as starting materials for the preparation of such unsaturated polyester resins include unsaturated polybasic acids having an ethylenically unsaturated bond and their anhydrides, such as fumaric acid, maleic acid and its anhydride, and itaconic acid; and saturated polybasic acids and their anhydrides, such as o-phthalic acid and its anhydride, isophthalic acid, terepthalic acid, trimellitic acid and adipic acid.

Useful polyhydric alcohols include etylene glycol, propylene glycol, butylene glycol, neopantyl glycol, 1,6-hexanediol, diethylene glycol, dipropylene glycol, triethylene glycol, polyethylene glycol, trimethylolpropane, glycerol, adducts of bisphenol with ethylene oxide or propylene oxide, hydrogenated bisphenol and the like.

Moreover, in the preparation of the above-described unsaturated polyester compounds, part of the polybasic acid may be replaced by a monobasic acid such as fatty acid or benzoic acid, and part of the polyhydric alcohol may be replaced by a monohydric alcohol.

In addition, unsaturated polyester compounds which have been modified with an epoxy acrylate, polyester acrylate or isocyanate compound and have been mixed with and dissolved in an ethylenically unsaturated monomer as described above also come within the category of the unsaturated polyester resin of the present invention.

In order that the molding material of the present invention may produce molded articles meeting the physical performance requirements of FRPs, it is essential that a reinforcing fiber component be present therein.

As the reinforcing fiber, there can be used any of various fibers that are well known in the art. Useful fibers include inorganic fibers such as glass fibers, carbon fibers and metallic fibers, and organic fibers such as vinylon fibers, polyester fibers, polyamide fibers and rayon fibers. These fibers may be used in admixture of two or more.

In order to obtain a combination of good physical performance and attractive appearance in the

resulting FRP molded products, the content of the reinforcing fiber should preferably be in the range of 10 to 50% by weight, and more preferably in the range of 20 to 40% by weight.

Moreover, a finely-ground inorganic filler is also used as an essential ingredient for the purpose of reducing the degree of shrinkage of the molding material and improving its fluidity within the mold.

There can be used any of various inorganic fillers that are well known in the art as fillers for BMC, SMC,MMD materials and RI materials. Specific examples thereof include calcium carbonate, aluminum hydroxide, clay, calcium magnesium carbonate, barium sulfate, glass beads, glass microballoons, aluminum silicate and its foamed product, and the mixture thereof.

The content of the finely-ground inorganic filler is preferably in the range of 10 to 70% by weight. Especially in applications (such as automobile body panels) requiring a highly attractive appearance, the content of the inorganic filler should be in the range of 30 to 60% by weight.

The particle diameter of the inorganic filler is preferably not greater than 100 $\mu$, and more preferably not greater than 30 $\mu$.

If necessary, the molding material of the present invention can contain, in addition to the above-described essential ingredients, various organic and inorganic additives including curing agents, polymerization inhibitors, colorants, viscosity modifier and the like.

Thus, any additives that have heretofore been used commonly in BMCs, SMCs, MMD materials and RI materials can be used in the molding material of the present invention. It is to be understood that the present invention is not limited by the types or contents of these additives.

The FRP molding material of the present invention has the advantage that, when it is heat-cured in a mold and the molded article is removed from the mold, the adhesion between the surfaces of the mold and the molded article is low and, therefore, the nolded article is free of surface defects which are frequently developed in molding materials having a highly reduced degree of molding shrinkage.

The molding material of the present invention also has the advantage that the LPA incorporated therein exhibits satisfactory performance, thus permitting molded articles having good surface smoothness and gloss to be produced with high efficiency.

Moreover, the molding material of the present invention makes it possible to eliminate the use of an external release agent which is applied to the mold just before each cycle of molding or frequently during molding. This serves to enhance productivity, simplify the pretreatment (e.g., degreasing of the surface) required for subsequent coating of the molded article, and further improve some properties (such as adhesion and resistance to blistering) of the coating film.

Furthermore, the molding material of the present invention permits the acid-modified vinyl acetate copolymer or saturated polyester compound to exhibit its excellent effect of reducing the degree of molding shrinkage, without exerting any influence on the mold release properties of the FRP products formed therefrom. Accordingly, the molding material of the present invention is not only applicable to the manufacture of common molded articles, but also serves to extend the utility of FRPs to applications (such as automobiles, aircraft, ships and railway rolling stocks) requiring a high level of appearance characteristics (e.g., dimensional stability of structural components, and surface smoothness) in the design and manufacture thereof. Thus, the molding material of the present invention is highly useful from an industrial point of view.

(Examples)

The present invention is further illustrated by the following examples.

It is to be understood that these examples are only illustrative of the practice of the invention and are not intended to limit the scope of the invention.

Although BMCs, SMCs, MMD materials and RI materials are different in the type of raw materials and the method of preparation, they all have a similar composition comprising components performing substantially the same functions in the manufacture of FRP moldings and also produce a similar effect due to their composition. Accordingly, the following examples and comparative examples are concerned with SMCs alone.

The unsaturated polyester resin used in the examples and comparative examples was prepared according to the following procedure.

A 60-liter reaction vessel equipped with a jacket type heating unit using Dowtherm as the heating medium was charged with 17,650 g (180 moles) of maleic anhydride, 7,190 g (94.5 moles) of propylene glycol and 9,842 g (94.5 moles) of neopentyl glycol. Under an atmosphere of nitrogen, this mixture was heated to 200 °C to condense the reactants with the elimination of water. When the acid value of the

reaction product as determined by the method of JIS-K-6901 reached 25 mg KOH per gram, cooling was started to stop the reaction. To the resulting unsaturated polyester compound were added p-benzoquinone as a polymerization inhibitor and styrene as a reactive diluent. This mixture is called "unsaturated polyester resin A".

The amounts of p-benzoquinone and styrene used in unsaturated polyester resin A were adjusted to 500 ppm and 40%, respectively.

When measured according to the method described in JIS-K-9601, i.e., with a Brookfield type viscometer, the viscosity of unsaturated polyester resin A was 3.5 poises.

Moreover, its high-temperature curing characteristics as defined in JIS-K-9601 were evaluated. As a result, it had a gelation time of 22 minutes and 30 seconds, a curing time of 24 minutes and 10 seconds, and a maximum heating temperature of 255 °C.

The higher fatty acid calcium salts used in the following examples and comparative examples were prepared by dissolving a fatty acid in absolute alcohol at 50 °C, adding an aqueous solution of sodium hydroxide dropwise thereto, and then subjecting the resulting fatty acid sodium salt and calcium chloride to double decomposition in a mixture of water and alcohol.

The precipitated fatty acid calcium salt was separated by filtration, washed with water, alcohol and acetone, and then dried in a vacuum. Prior to use, this salt was ground and passed through a 200 mesh screen.

In the usual manner, unsaturated polyester A was mixed with one or more thermoplastic resins, one or more inorganic fillers such as calcium carbonate, a curing catalyst, and internal release agent, followed by stirring. Also in the usual manner, a viscosity modifier, or magnesium oxide, was added thereto with stirring to obtain a resin compound for SMC.

In SMC production equipment, this resin compound for SMC was applied onto a sheet of polyethylene and a predetermined amount of reinforcing glass roving chops having a length of 1 inch were continuously fed thereto so as to be impregnated with the compound.

in applying the compound for SMC onto the polyethylene sheet, the doctor box was so adjusted that the compound was applied to a width of 300 mm and a thickness of about 0.8 mm.

The amount of glass roving chops, 1 inch long, fed to the compound on the polyethylene sheet was 400 g per minute. In order to attain a predetermined glass content, the traveling speed of the polyethylene sheet was controlled properly.

The sheet comprising glass roving chops impregnated with the compound was wound on a paper core tube, sealed with a polyester film and then aged in air at 40 °C for 40 hours to control its viscosity. Thus, there was obtained a molding material.

This molding material weighed about 270 g per 900 (30x30) $cm^2$.

The SMC was molded by use of a mold designed for the formation of a square flat plate and having a specular surface with an area of 900 (30x30) $cm^2$.

The molding conditions included a mold surface temperature of 145 °C, an applied pressure of 75 kg.$cm^2$, and a pressing time for heat curing of 120 seconds.

Since the main purpose of this experiment was the evaluation of mold release properties, no external release agent was used.

The SMC molding material was cut into square pieces measuring 180 x 180 mm. Four such pieces were stacked and molded. The resulting molded plate was about 400 g in weight and about 2.5 mm in thickness.

The surface smoothness of the molded plate was evaluated with a resin panel strain meter (manufactured by TOKYO BOEKI LTD.).

Specifically, the SMC molded plate was placed horizontally on a platen. Using a sensor traveling along its surface, the surface height was measured at intervals of 1 mm and sampled with a minimum resolution of 1 μm. The fifth-order regression line was obtained from the measured values. Then, the difference between the regression line and the curve formed by connecting the measured values was indicated as an area per unit length. As the value thus obtained becomes smaller, the effect of reducing the degree of shrinkage is considered to be better and, in addition, the surface smoothness is considered to be improved.

In these examples, the sensor was made to travel over a distance of about 330 mm, and measurements were made along the two diagonal lines of the square molded plate. The average of these two measurements is called the "surface number (SN)".

For applications (such as automobile body panels) requiring a high degree of surface smoothness, the surface number should be not greater than 200 and preferably not greater than 100.

The magnesium oxide used was Magnesiun Oxide #20 (a product of Kyowa Chemicals Industry Co.). Unless otherwise specified, this product was used in all of the following examples and comparative

examples.

In the tables showing the examples and comparative examples, the content of the reinforcing fiber is expressed as a weight percentage of the molding material and the contents of the other components are expressed in parts by weight.

For the acid-modified vinyl acetate copolymer and the higher fatty acid calcium salt, their weight percentages based on the total weight of the molding material, together with their contents in parts by weight, are given in parentheses.

Unless otherwise specified, these manners of expression apply to all of the following examples and comparative examples.

The tables also include the results of evaluation of the surface quality of the molded article with respect to visible pinholes, cracks and surface fracture. These results are expressed on the basis of the following criteria.

Pinholes: None (O); 1 to 10 (X); More than 10 (XX).
Cracks: None (O); 1 to 10 (X); More than 10 (XX).
Surface fracture: None (O); Yes (X).

In the above criteria, surface fracture is a phenomenon in which the broken surface fragments separate from the molded article and adhere to the surface of the mold, as distinguished from cracking in which the surface of the molded article is broken by the formation of linear fissures, but the broken surface portions still remain in the surface of the molded article. It is to be understood that, as far as mold release properties are concerned, surface fracture is much worse than cracking.

Unless otherwise specified, the above-described criteria for evaluation of the surface quality of the molded article apply to all of the following examples and comparative examples.

## Examples 1 to 3

In these examples, Denka ASRM-5 (a product of DENKI KAGAKU KOGYO K.K.) was used as an acid-modified vinyl acetate copolymer. This copolymer was mixed with and dissolved in styrene containing 200 ppa p-benzoquinone, so that the resulting solution would contain the copolymer at a concentration of 40% by weight. This solution is called "vinyl acetate resin A".

When determined according to the method described in JIS-K-6901, the acid value of this copolymer was 5.4 mg KOH per gram. Its viscosity was 60 poises as measured at 25°C with a Brookfield type viscometer.

Using vinyl acetate resin A and unsaturated polyester resin A as described previously, SMCs were prepared according to the previously described procedure. Then, these SMCs were molded according to the previously described procedure. The formulations employed, the results of evaluation of the appearance of the molded articles, and the results of the evaluation of their surface smoothness with a resin panel strain meter are shown in Table 1 under Examples 1-3.

As shown in Table 1, two types of thermoplastic resins, LPA1 and LPA2, were used in combination with vinyl acetate resin A. LPA1 was a 35% solution of polystyrene in styrene (ESTA EM-116; a product of Mitsui-Toatsu Chemicals Co.) and LPA2 was finely-ground polyethylene (FLOTHENE UF-20; a product of SEITETSU KAGAKU CO.).

The calcium carbonate used in these examples was NS #200 (a product of NITTO FUNKA KOGYO CO.), the curing catalyst was tert-butyl peroxybenzoate (TBPB), the reinforcing glass fiber was ERK4630-ED240 (a product of Nippon Electric Glass Co.), the zinc stearate was Zinc Stearate N (a product of TANNAN KAGAKU KOGYO CO.), and the thickening agent was Magnesium Oxide #20 (a product of Kyowa Chemicals Industry Co.).

## Comparative Examples 1 to 3

In these comparative examples, SMCs were prepared in the same manner as described in Examples 1 to 3, except that calcium stearate was replaced by the same amount of zinc stearate.

These SMCs were molded and evaluated in the same manner as described in Examples 1 to 3. The results of evaluation are shown in Table 1 under Comparative Example 1 to 3.

It can be seen from Examples 1-3 and Comparative Examples 1-3 that, within the specified content range of the acid-modified vinyl acetate copolymer of the present invention, calcium stearate is markedly effective and brings about a distinct improvement in the appearance of the molded article.

Comparative Examples 4 and 5

In these comparative examples, SMCs were prepared, molded and evaluated in the same manner as described for Comparative Example 2, except that the formulation of Comparative Example 2 was modified by increasing the content of zinc stearate.

The experimental results thus obtained are shown in Table 2.

It can be seen from these results that an increase in zinc stearate content is effective against cracking and surface fracture of the molded article. However, this also results in a tendency to pinhole formation, an increase in SN, and a deterioration in surface smoothness. Thus, it is evident that this does not serve as an effective measure.

Example 4

Employing the formulation of Example 2 which was modified by varying the content of calcium stearate, an SMC was prepared and molded in the previously described manner.

The results of evaluation are shown in Table 3.

Example 5

Employing the formulation of Example 3 which was modified by varying the content of calcium stearate, an SMC was prepared and molded in the previously described manner.

The results of evaluation are shown in Table 3.

It can be seen from the results shown in Table 3 that, when used in combination with an acid-modified vinyl acetate copolymer, the higher fatty acid calcium salt is particularly effective in the specified content range of the present invention.

Example 6

Employing the formulation of Example 2 which was modified by using LP-40A (a 40 wt.% solution of an acid-modified vinyl acetate copolymer in styrene; a product of Union Carbide Corp.) in place of vinyl acetate resin A, an SMC was prepared and molded in the previously described manner.

The results of evaluation are shown in Table 4.

The acid value of LP-40A as measured by the method of JIS-K-6901 was 2.5 mg KOH. When calculated on the basis of the styrene concentration, the acid value of the acid-modified vinyl acetate copolymer was 6.5 mg KOH.

Example 7

An SMC was prepared and molded in the same manner as described previously, except that MODIPER SV50-20A (a 20 wt.% solution of an acid-modified vinyl acetate copolymer in styrene; a product of Japan Fats and Oils Co.) was used as an acid-modified vinyl acetate copolymer.

The results of evaluation are shown in Table 4.

The acid value of MODIPER SV50-20A as measured by the method of JIS-K-6901 was 6.2 mg KOH. When calculated on the basis of the styrene concentration, the acid value of the acid-modified vinyl acetate copolymer was 31.0 mg KOH.

Comparative Examples 6 and 7

SMCs were prepared and molded in the same manner as described in Examples 6 and 7, except that zinc stearate was used in place of calcium stearate.

The results of evaluation are shown in Table 4.

It is confirmed by Examples 6-7 and Comparative Examples 6-7 that, within the specified range of the acid value of the acid-modified vinyl acetate copolym er of present invention, the higher fatty acid calcium

salt is markedly effective in improving the releasability of the molded article from the mold and the surface smoothness of the molded article.

Examples 8 to 10

A 5-liter four-necked flask was charged with 1,461 g (10 moles) of adipic acid, 326 g (5.25 moles) of ethylene glycol and 620 g (5.25 moles) of 1,6-hexanediol. Under an atmosphere of nitrogen, this mixture was heated at 220° C to condense the reactants with the elimination of water. When the acid value of the reaction product as determined by the method of JIS-K-6901 reached 10 mg KOH, cooling was started to stop the reaction.

The reaction product was mixed with and dissolved in styrene containing 200 ppm p-benzoquinone, so that the resulting solution would contain the saturated polyester compound at a concentration of 40%. This solution is called "saturated polyester resin B".

The viscosity of this saturated polyester resin B was 1.6 poises as measured at 25° C with a Brookfield type viscometer.

When calculated according to the previously described method, the molecular weight per ester linkage of the polyester compound was 98.5.

Using saturated polyester resin B and unsaturated polyester resin A as described previously, SMCs were prepared according to the previously described procedure.

Then, these SMCs were molded according to the previously described procedure. The formulations employed, the results of evaluation of the appearance of the molded articles, and the results of the evaluation of their surfaces smoothness with a resin panel strain meter are shown in Table 5.

Comparative Examples 8 to 10

Employing the formulations of Examples 8 to 10 which were modified by using zinc stearate in place of calcium stearate, SMCs were prepared and molded in the same manner as described in Examples 8 to 10.

The results of evaluation of these SMCs are shown in Table 5.

It is confirmed by Examples 8-10 and Comparative Examples 8-10 that, within the specified range of the content of the saturated polyester compound of the present invention, the higher fatty acid calcium salt is markedly effective in improving the appearance of the nolded article.

Comparative Examples 11 and 12

Employing the formulation of Comparative Example 9 which was modified by increasing the content of zinc stearate, SMCs were prepared and molded in the same manner as described for Comparative Example 9.

The results of evaluation of these SMCs are shown in Table 6 under Comparative Examples 11 and 12.

It can be seen from these results that an increase in zinc stearate content is effective against cracking and surface fracture of the molded article. However, this also results in a tendency to pinhole formation, an increase in SN, and a deterioration in surface smoothness. Thus, it is recognized that this does not serve as an effective measure.

Example 11

Employing the formulation of Example 9 which was modified by replacing part of the calcium stearate by zinc stearate, an SMC was prepared and molded in the same manner as described in Examples 8 to 10.

The results of evaluation of this SMC are shown in Table 7.

Example 12

Employing the formulation of Example 10 which was modified by varying the content of calcium stearate, an SMC was prepared and molded in the same manner as described in Examples 8 to 10.

The results of evaluation of this SMC are shown in Table 7.

It can be seen from the results shown in Table 7 that, when used in combination with a saturated polyester compound, clacium stearate is effective in the specified content range of the present invention.

Example 13

A compound formed by ring-opening polymerization of ε-caprolactone and having a molecular weight per ester linkage of 114 was mixed with and dissolved in styrene containing 200 ppm p-benzoquinone, so that the resulting solution would contain the aforesaid compound at a concentration of 40%. This solution is called "saturated polyester resin C". Employing the formulation of Example 9 which was modified by using saturated polyester resin C in place of saturate polyester resin B, an SMC was prepared and molded in the previously described manner.

The results of evaluation of this SMC are shown in Table 8.

The aforesaid polymer of ε-caprolactone was Plaxel H-1 (a product of Daisel Chemical Industries Co.), and the viscosity of saturated polyester resin C containing 40% of the polymer was 1.3 poises as measured with a Brookfield type viscometer.

Examples 14

A 5-liter four-necked flask was charged with 730 g (5.0 moles) of adipic acid and 937 g (5.25 moles) of KB-300 (a compound formed by the addition of an average of 2.2 moles of propylene oxide to bisphenol, having an average molecular weight of 357 g/mol; a product of Mitsui-Toatsu Chemicals Co.). Under an atmosphere of nitrogen, this mixture was heated at 220°C to condense the reactants with the elimination of water. When the acid value of the reaction product as determined by the method of JIS-K-6901 reached 10 mg KOH, cooling was started to stop the reaction. Then, styrene containing 200 ppm p-benzoquinone was mixed with and dissolved in the reaction product, so that the resulting solution would contain the saturated polyester compound at a concentration of 40%. This solution is called "saturated polyester resin D".

The viscosity of this saturated polyester resin D was 2.4 poises as measured at 25°C with a Brookfield type viscometer.

When calculated according to the previously described method, its molecular weight per ester linkage was 236.5.

Employing the formulation of Example 9 which was modified by using saturated polyester resin D in place of saturated polyester resin B, an SMC was prepared and molded.

The results of evaluation of this SMC are shown in Table 8.

Example 15

A 5-liter four-necked flask was charged with 1,180 g (10 moles) of succinic acid, 496 g (8.4 moles) of ethylene glycol and 208 g (2.1 moles) of neopentyl glycol. Under an atmosphere of nitrogen, this mixture was heated at 220°C to condense the reactants with the elimination of water. When the acid value of the reaction product as determined by the method of JIS-K-6901 reached 10 mg KOH, cooling was started to stop the reaction. Then, styrene containing 200 ppm p-benzoquinone was mixed with and dissolved in the reaction product, so that the resulting solution would contain the saturated polyester compound at a concentration of 40%. This solution is called "saturated polyester resin E".

The viscosity of this saturated polyester resin E was 1.9 poises as measured at 25°C with a Brookfield type viscometer.

Its molecular weight per ester linkage was 78.2.

Employing the formulation of Example 9 which was modified by using saturated polyester resin E in place of saturated polyester resin B, an SMC was prepared and molded in the previously described manner.

The results of evaluation of this SMC are shown in Table 8.

Example 16

A 5-liter four-necked flask was charged with 2,000 g of saturated polyester resin B as prepared in Examples 8 to 10, and 50 g of MDI-CR (a polymethylene polyphenyl isocyanate as crude MDI; a product of Mitsui-Toatsu Chemicals Co.). This mixture was reacted at 80°C with dry air blown therethrough. After about 5 hours, the disappearance of isocyanate group from the reaction mixture was confirmed by measurement with an infrared (IR) spectrometer. Then, cooling was started to stop the reaction.

The resulting reaction product had a viscosity of 7.8 poises as measured at 25°C with a Brookfield type viscometer. This reaction product is called "saturated polyester resin F".

As was explained previously, the molecular weight per ester linkage of this saturated polyester compound having been subjected to chain extension with the aid of the polyfunctional isocyanate is the same as that of the saturated polyester compound being the main component of saturated polyester resin B.

Employing the formulation of Example 9 which was modified by using saturated polyester resin F in place of saturated polyester resin B, an SMC was prepared and molded.

The results of evaluation of this SMC are shown in Table 8.

Comparative Examples 13 to 16

SMCs were prepared and molded in the same manner as described in Examples 13 to 16, except that zinc stearate was used in place of calcium stearate.

The results of evaluation of these SMCs are shown in Table 9.

It is confirmed by the foregoing Examples 13-16 and Comparative Examples 13-16 that, within the specified range of the molecular weight per ester linkage of the saturated polyester compound of the present invention, calcium stearate functions effectively to bring about a marked improvement in the releasability of the molded article from the mold and the surface smoothness of the molded article.

Examples 17 to 19

Employing the formulation of Example 2 which was modified by replacing calcium stearate by each of three other higher fatty acid calcium salts, SMCs were prepared, molded and evaluated in the same manner as described for Example 2. The results are shown in Table 10 under Examples 17 to 19. It can be seen from these results that the higher fatty acid calciun salts within the scope of the present invention are markedly effective and bring about a distinct improvement in the appearance of the molded article.

In the higher fatty acid calcium salts used in these examples, the number of carbon atoms of the fatty acid moiety was as follows: 12 for calciun laurate, 16 for calcium palmitate, and 18 for calcium oleate.

Examples 20 and 21

Employing the formulation of Example 9 which was modified by replacing calcium stearate by each of two other higher fatty acid calcium salts, SMCs were prepared, molded and evaluated in the same manner as described for Example 9. The results are shown in Table 10 under Examples 20 and 21. It can be seen from these results that the higher fatty acid calcium salts within the scope of the present invention are markedly effective and bring about a distinct improvement in the appearance of the molded article.

Table 1

| | Example | | | Comparative Example | | |
|---|---|---|---|---|---|---|
| | 1 | 2 | 3 | 1 | 2 | 3 |
| Unsaturated polyester resin A | 55 | 50 | 60 | 60 | 50 | 60 |
| Vinyl acetate resin A | 15 | 40 | 40 | 15 | 40 | 40 |
| (wt.% of acid-modified vinyl acetate copolymer) | (1.71) | (4.55) | (5.66) | (1.71) | (4.55) | (5.66) |
| LPA 1 | 15 | | | 15 | | |
| LPA 2 | 5 | | | 5 | | |
| Styrene | 10 | 10 | | 10 | 10 | |
| Calcium carbonate | 150 | 150 | 100 | 150 | 150 | 100 |
| Calcium stearate | 4 | 4 | 4 | - | - | - |
| (wt.% of calcium stearate) | (1.14) | (1.14) | (1.41) | | | |
| Zinc stearate | - | - | - | 4 | 4 | 4 |
| Curing catalyst | 1.5 | 1.5 | 1.5 | 1.5 | 1.5 | 1.5 |
| Thickening agent | 1.0 | 1.0 | 1.0 | 1.0 | 1.0 | 1.0 |
| Glass fiber (wt.%) | 27 | 27 | 27 | 27 | 27 | 27 |
| Evaluation of surface quality of molded article | | | | | | |
| Pinholes | O | O | O | O | O | O |
| Cracks | O | O | O | × | ×× | ×× |
| Surface fracture | O | O | O | O | × | × |
| Surface number (SN) | 273 | 150 | 192 | 328 | 203 | 309 |

Table 2

| | Comparative Example | |
|---|---|---|
| | 4 | 5 |
| Unsaturated polyester resin A | 50 | 55 |
| Vinyl acetate resin A | 40 | 40 |
| (wt.% of acid-modified vinyl acetate copolymer) | (4.52) | (4.48) |
| Styrene | 5 | 5 |
| Calcium carbonate | 150 | 150 |
| Calcium stearate | - | - |
| (wt.% of calcium stearate) | | |
| Zinc stearate | 6 | 8 |
| Curing catalyst | 1.5 | 1.5 |
| Thickening agent | 1.0 | 1.0 |
| Glass fiber (wt.%) | 27 | 27 |
| Evaluation of surface quality of molded article | | |
| Pinholes | O | ×× |
| Cracks | × | O |
| Surface fracture | O | O |
| Surface number (SN) | 242 | 269 |

Table 3

| | Example | |
|---|---|---|
| | 4 | 5 |
| Unsaturated polyester resin A | 55 | 60 |
| Vinyl acetate resin A | 40 | 40 |
| (wt.% of acid-modified vinyl acetate copolymer) | (4.55) | (5.58) |
| Styrene | 5 | |
| Calcium carbonate | 150 | 100 |
| Calcium stearate | 2 | 7 |
| (wt.% of calcium stearate) | (0.57) | (2.44) |
| Zinc stearate | 2 | |
| | (0.57) | |
| Curing catalyst | 1.5 | 1.5 |
| Thickening agent | 1.0 | 1.0 |
| Glass fiber (wt.%) | 27 | 27 |
| Evaluation of surface quality of molded article | | |
| Pinholes | ○ | ○ |
| Cracks | ○ | ○ |
| Surface fracture | ○ | ○ |
| Surface number (SN) | 164 | 217 |

Table 4

| | Example | | Comparative Example | |
|---|---|---|---|---|
| | 6 | 7 | 6 | 7 |
| Unsaturated polyester resin A | 50 | 50 | 50 | 50 |
| LP-40A | 40 | - | 40 | - |
| MODIPER SV50-20A | - | 40 | - | 40 |
| (wt.% of acid-modified vinyl acetate copolymer) | (4.55) | (2.27) | (4.55) | (2.27) |
| LPA 2 | - | 5 | - | 5 |
| Styrene | 10 | 5 | 10 | 5 |
| Calcium carbonate | 150 | 150 | 150 | 150 |
| Calcium stearate | 4 | 4 | - | - |
| (wt.% of calcium stearate) | (1.14) | (1.14) | | |
| Zinc stearate | - | - | 4 | 4 |
| Curing catalyst | 1.5 | 1.5 | 1.5 | 1.5 |
| Thickening agent | 1.0 | 1.0 | 1.0 | 1.0 |
| Glass fiber (wt.%) | 27 | 27 | 27 | 27 |
| Evaluation of surface quality of molded article | | | | |
| Pinholes | ○ | ○ | ○ | ○ |
| Cracks | ○ | ○ | ×× | × |
| Surface fracture | ○ | ○ | × | ○ |
| Surface number (SN) | 145 | 223 | 206 | 230 |

Table 5

| | Example | | | Comparative Exmaple | | |
|---|---|---|---|---|---|---|
| | 8 | 9 | 10 | 8 | 9 | 10 |
| Unsaturated polyester resin A | 55 | 60 | 50 | 55 | 60 | 50 |
| Saturated polyester resin B | 10 | 40 | 50 | 10 | 40 | 50 |
| (wt.% of saturated polyester compound) | (1.02) | (4.08) | (6.44) | (1.02) | (4.08) | (6.44) |
| LPA 1 | 20 | - | - | 20 | - | - |
| LPA 2 | 5 | - | - | 5 | - | - |
| Styrene | 10 | - | - | 10 | - | - |
| Calcium carbonate | 180 | 180 | 120 | 180 | 180 | 120 |
| Calcium stearate | 4 | 4 | 4 | - | - | - |
| (wt.% of calcium stearate) | (1.02) | (1.02) | (1.29) | | | |
| Zinc stearate | - | - | - | 4 | 4 | 4 |
| Curing catalyst | 1.5 | 1.5 | 1.5 | 1.5 | 1.5 | 1.5 |
| Thickening agent | 1.0 | 1.0 | 1.0 | 1.0 | 1.0 | 1.0 |
| Glass fiber (wt.%) | 27 | 27 | 27 | 27 | 27 | 27 |
| Evaluation of surface quality of molded article | | | | | | |
| Pinholes | O | O | O | O | O | O |
| Cracks | O | O | O | × | ×× | ×× |
| Surface fracture | O | O | O | O | × | × |
| Surface number (SN) | 362 | 114 | 215 | 340 | 167 | 304 |

Table 6

| | Comparative Example | |
|---|---|---|
| | 11 | 12 |
| Unsaturated polyester resin A | 60 | 60 |
| Saturated polyester resin B | 40 | 40 |
| (wt.% of saturated polyester compound) | (4.05) | (4.02) |
| Calcium carbonate | 180 | 180 |
| Calcium stearate | - | - |
| (wt.% of calcium stearate) | | |
| Zinc stearate | 6 | 8 |
| Curing catalyst | 1.5 | 1.5 |
| Thickening agent | 1.0 | 1.0 |
| Glass fiber (wt.%) | 27 | 27 |
| Evaluation of surface quality of molded article | | |
| Pinholes | O | ×× |
| Cracks | × | O |
| Surface fracture | O | O |
| Surfance number (SN) | 199 | 256 |

Table 7

| | Example | |
|---|---|---|
| | 11 | 12 |
| Unsaturated polyester resin A | 60 | 50 |
| Saturated polyester resin B | 40 | 50 |
| (wt.% of saturated polyester Compound) | (4.08) | (6.96) |
| Calcium carbonate | 180 | 100 |
| Calcium stearate | 2 | 7 |
| (wt.% of calcium stearate) | (0.51) | (2.44) |
| Zinc stearate | 2 | - |
| Curing catalyst | 1.5 | 1.5 |
| Thickening agent | 1.0 | 1.0 |
| Glass fiber (wt.%) | 27 | 27 |
| Evaluation of surface quality of molded article | | |
| Pinholes | ○ | ○ |
| Cracks | ○ | ○ |
| Surface fracture | ○ | ○ |
| Surface number (SN) | 136 | 208 |

Table 8

| | Example | | | |
|---|---|---|---|---|
| | 13 | 14 | 15 | 16 |
| Unsaturated polyester resin A | 60 | 60 | 60 | 60 |
| Saturated polyester resin C | 40 | - | - | - |
| " D | - | 40 | - | - |
| " E | - | - | 40 | - |
| " F | - | - | - | 40 |
| (wt.% of saturated polyester compound) | (4.08) | (4.08) | (4.08) | (4.08) |
| Calcium carbonate | 180 | 180 | 180 | 180 |
| Calcium stearate | 4 | 4 | 4 | 4 |
| (wt.% of calcium stearate) | (1.02) | (1.02) | (1.02) | (1.02) |
| Zinc stearate | - | - | - | - |
| Curing catalyst | 1.5 | 1.5 | 1.5 | 1.5 |
| Thickening agent | 1.0 | 1.0 | 1.0 | 1.0 |
| Glass fiber (wt.%) | 27 | 27 | 27 | 27 |
| Evaluation of surface quality of molded article | | | | |
| Pinholes | ○ | ○ | ○ | ○ |
| Cracks | ○ | ○ | ○ | ○ |
| Surface fracture | ○ | ○ | ○ | ○ |
| Surface number (SN) | 127 | 140 | 165 | 121 |

Table 9

| | Comparative Example | | | |
|---|---|---|---|---|
| | 13 | 14 | 15 | 16 |
| Unsaturated polyester resin A | 60 | 60 | 60 | 60 |
| Saturated polyester resin C | 40 | - | - | - |
| " D | - | 40 | - | - |
| " E | - | - | 40 | - |
| " F | - | - | - | 40 |
| (wt.% of saturated polyester compound) | (4.08) | (4.08) | (4.08) | (4.08) |
| Calcium carbonate | 180 | 180 | 180 | 180 |
| Calcium stearate | - | - | - | - |
| (wt.% of calcium stearate) | | | | |
| Zinc stearate | 4 | 4 | 4 | 4 |
| Curing catalyst | 1.5 | 1.5 | 1.5 | 1.5 |
| Thickening agent | 1.0 | 1.0 | 1.0 | 1.0 |
| Glass fiber (wt.%) | 27 | 27 | 27 | 27 |
| Evaluation of surface quality of molded article | | | | |
| Pinholes | ○ | ○ | ○ | ○ |
| Cracks | ×× | × | × | × |
| Surface fracture | × | ○ | ○ | ○ |
| Surface number (SN) | 208 | 269 | 243 | 190 |

Table 10

| | Example | | | | | |
|---|---|---|---|---|---|---|
| | 17 | 18 | 19 | 20 | 21 | 22 |
| Unsaturated polyester resin A | 50 | 50 | 50 | 60 | 60 | 60 |
| Vinyl acetate resin A | 40 | 40 | 40 | | | |
| (wt.% of acid-modified vinyl acetate copolymer) | (4.55) | (4.55) | (4.55) | | | |
| Saturated polyester resin B | | | | 40 | 40 | 40 |
| (wt.% of saturated polyester compound) | | | | (4.08) | (4.08) | (4.08) |
| Styrene | 10 | 10 | 10 | | | |
| Calcium carbonate | 150 | 150 | 150 | 180 | 180 | 180 |
| Calcium laurate | 4 | | | 4 | | - |
| Clacium palmitate | | 4 | | | 4 | |
| Calcium oleate | | | 4 | | | 4 |
| (wt.% of higher fatty acid calcium salt) | (1.14) | (1.14) | (1.14) | (1.02) | (1.02) | (1.02) |
| Curing catalyst | 1.5 | 1.5 | 1.5 | 1.5 | 1.5 | 1.5 |
| Viscosity modifier | 1.0 | 1.0 | 1.0 | 1.0 | 1.0 | 1.0 |
| Glass fiber (wt %) | 27 | 27 | 27 | 27 | 27 | 27 |
| Evaluation of surface quality of molded article | | | | | | |
| Pinholes | ○ | ○ | ○ | ○ | ○ | ○ |
| Cracks | ○ | ○ | ○ | ○ | ○ | ○ |
| Surface fracture | ○ | ○ | ○ | ○ | ○ | ○ |
| Surface number (SN) | 195 | 164 | 180 | 154 | 138 | 125 |

## Claims

1. In a material for the manufacture of fiber-reinforced thermosetting resin moldings which contains an unsaturated polyester resin, a fibrous reinforcing agent and an inorganic filler as principal ingredients, the improvement wherein at least one substance selected from the group consisting of (a) an acid-modified vinyl acetate copolymer having an acid value of 5 to 35 mg KOH per gram and (b) a saturated polyester compound having a molecular weight per ester linkage of 70 to 250, is added thereto as a low profile additive in an amount of 1.5 to 6.0% by weight for the vinyl acetate copolymer or 1.0 to 7.0% by weight for the saturated polyester compound, and wherein 0.5 to 2.5% by weight of a higher fatty acid calcium salt is used simultaneously.

2. The improvement according to claim 1 wherein the acid-modified vinyl acetate copolymer is a copolymer formed from vinyl acetate and at least one unsaturated acid having an ethylenically unsaturated bond, the unsaturated acid being selected from the group consisting of acrylic acid, methacrylic acid, maleic acid, fumaric acid, crotonic acid and vinylacetic acid.

3. The improvement according to claim 1 wherein the acid-modified vinyl acetate copolymer is a random copolymer formed by use of at least one ethylenically unsaturated monomer selected from the group consisting of ethylene, propylene, vinyl chloride, acrylic ester compounds, methacrylic ester compounds, maleic ester compounds, fumaric ester compounds, crotonic esters and styrene.

4. The improvement according to claim 1 wherein the acid-modified vinyl acetate copolymer is a block copolymer formed by use of at least one ethylenically unsaturated monomer selected from the group consisting of ethylene, propylene, vinyl chloride, acrylic ester compounds, methacrylic ester compounds, maleic ester compounds, fumaric ester compounds, crotonic esters and styrene.

5. The improvement according to claim 1 wherein the acid-modified vinyl acetate copolymer is used in the form of a solution in an ethylenically unsaturated monomer selected from the group consisting of styrene, methyl methacrylate and vinyltoluene, or in a polyvinyl compound selected from the group consisting of divinylbenzene and diallyl phthalate.

6. The improvement according to claim 1 wherein the acid-modified vinyl acetate copolymer has a molecular weight of 10,000 to 200,000.

7. The improvement according to claim 1 wherein the saturated polyester compound is a product formed by the condensation of at least one saturated polybasic acid free of ethylenic unsaturation or its anhydride with at least one polyhydric alcohol, the saturated polybasic acid or its anhydride being selected from the group consisting of phthalic acid and its anhydride, isophthalic acid, terephthalic acid, adipic acid, succinic acid and their anhydrides, HET acid, tetrahydrophthalic acid and its anhydride, and hexahydrophthalic acid and its anhydride, and the polyhydric acid being selected from the group consisting of ethylene glycol, propylene glycol, butylene glycol, neopentyl glycol, 1,6-hexanediol, diethylene glycol, dipropylene glycol, triethylene glycol, polyethylene glycol, glycerol, trimethylolpropane, pentaerythritol, bisphenol/ethylene oxide adduct, bisphenol/propylene oxide adduct and hydrogenated bisphenol.

8. The improvement according to claim 7 wherein part of the polybasic acid or its anhydride is replaced by a monobasic acid selected from the group consisting of fatty acids and benzoic acid, and part of the polyhydric alcohol is replaced by a monohydric alcohol.

9. The improvement according to claim 7 wherein the saturated polyester compound is used in the form of a solution in at least one ethylenically unsaturated monomer selected from the group consisting of styrene, methyl methacrylate and vinyltoluene.

10. The improvement according to claim 7 wherein the saturated polyester compound is used in the form of a solution in at least one polyvinyl compound selected from the group consisting of divinylbenzene and diallyl phthalate.

11. The improvement according to claim 1 wherein the higher fatty acid calcium salt has a maximum particle size of not greater than 100 mesh.

12. The improvement according to claim 1 wherein the higher fatty acid calcium salt has a maximum particle size of not greater than 200 mesh.

13. The improvement according to claim 1 wherein the higher fatty acid calcium salt is used in an amount of 0.75 to 1.50% by weight.

14. The improvement according to claim 1 wherein the unsaturated polyester resin is a product formed by the condensation of at least one polybasic acid or its anhydride with at least one polyhydric alcohol, the polybasic acid or its anhydride being selected from the group consisting of fumaric acid, maleic acid and its anhydride, itaconic acid, orthophthalic acid and its anhydrides, isophthalic acid, terephthalic acid, trimellitic acid and adipic acid, and the polyhydric acid being selected from the group consisting of ethylene glycol,

propylene glycol, butylene glycol, neopentyl glycol, 1,6-hexanediol, diethylene glycol, dipropylene glycol, triethylene glycol, polyethylene glycol, trimethylolpropane, glyçerol, bisphenol/ethylene oxide adduct, bisphenol/propylene oxide adduct and hydrogenated bisphenol.

15. The improvement according to claim 1 wherein the higher fatty acid calcium salt has 13 to 30 carbon atoms in the fatty acid moiety.

16. The improvement according to claim 1 wherein the higher fatty acid calcium salt is selected from the group consisting of calcium laurate, calcium palmitate, calcium myristate, calcium stearate, calcium oleate, calcium linoleate and calcium linolenate.